# EUROPÄISCHE PATENTSCHRIFT

(11) **EP 3 368 781 B1**
(45) Veröffentlichungstag und Bekanntmachung des Hinweises auf die Patenterteilung: **07.08.2019**
(21) Anmeldenummer: 16787448.6
(22) Anmeldetag: 26.10.2016
(51) Int. Cl.: F16B 41/00, F16B 23/00

(54) **DIEBSTAHLGESICHERTES SCHRAUBTEIL ZUR BEFESTIGUNG EINER FELGE AN EINEM KRAFTFAHRZEUG**
ANTI-THEFT SCREW PART FOR ATTACHING A WHEEL RIM TO A MOTOR VEHICLE
ÉLÉMENT DE VISSAGE À SÉCURITÉ ANTIVOL DESTINÉ À ÊTRE FIXÉ À UNE JANTE D'UN VÉHICULE AUTOMOBILE

(30) Priorität: 30.10.2015 DE 102015118613
(43) Veröffentlichungstag der Anmeldung: 05.09.2018
(73) Patentinhaber: ABC Umformtechnik GmbH & Co. KG, 58285 Gevelsberg (DE)
(72) Erfinder: RAJEWSKI, Horst, 58089 Hagen (DE); TRAEGER, Holger, 44789 Bochum (DE)
(74) Vertreter: Schweiger, Johannes
(86) Internationale Anmeldenummer: PCT/EP2016/075816
(87) Internationale Veröffentlichungsnummer: WO 2017/072182

(56) Entgegenhaltungen:
- EP-A1- 0 430 563
- WO-A2-2008/024093

## Beschreibung

Die Erfindung bezieht sich auf ein diebstahlgesichertes Schraubteil nach dem Oberbegriff des Anspruchs 1.

Diebstahlgesicherte Schraubteile werden unter anderem eingesetzt für die Diebstahlsicherung von Fahrzeugrädern. Üblicherweise liefern Fahrzeughersteller ihre Fahrzeuge wie folgt aus: Die Räder sind mittels handelsüblicher Schrauben, zumeist Sechskantschrauben, befestigt oder es sind Gewindebolzen vorgesehen, auf die die Räder aufgesteckt und mit entsprechenden Muttern fixiert sind. Derartige Räder kann man mit normalen Schlüsseln entfernen, also beispielsweise stehlen. Es sind bereits spezielle Schraubteile bekannt, die einen besonders ausgebildeten Kopf haben, der nur mit einem Spezialschlüssel, also einem Adapter, zusammenwirkt. So kann ein ungewolltes Entfernen eines Rades wirksam behindert werden.

Das diebstahlgesicherte Schraubteil der eingangs genannten Art ist aus der DE 199 02 192 A1 bekannt. Bei diesem Schraubteil gehen vom Außenkreis mehrere radiale Ausnehmungen aus, die sich radial nach außen erstrecken und Taschen bilden, in die ein Schlüssel eingreifen kann. Das Einsatzstück befindet sich innerhalb eines Innenkreises, innerhalb dessen eine innere Wandfläche des Einsatzteils liegt. Das Einsatzteil hat Vorsprünge, die radial nach außen vorspringen. Zwischen dem Innenkreis und dem Außenkreis bleibt ein ringförmig über 360 Grad umlaufender Spalt frei. In diesen ringförmigen Spalt kann ein rohrförmiges Werkzeug eingeführt und gedreht werden, z.B. mit einem Akkuschrauber. Dadurch kann das Einsatzstück mehr und mehr abgeschliffen werden. Auf diese Weise kann der Beitrag zur Verschlüsselung, der durch das Einsatzstück erhalten wird, mehr und mehr reduziert werden. In der Folge ist es einfacher, die dann im Wesentlichen nur noch durch den äußeren Rand bestimmte Verschlüsselung zu überwinden. Auf die unterschiedliche Orientierung des Einsatzstücks relativ zum Hauptstück und auf die Ausbildung des Einsatzstücks kommt es dann praktisch nicht mehr an. Es genügt ein rohrartiges Werkzeug, das zumindest radiale Vorsprünge hat, so dass es in einige der radialen Ausnehmungen eingreifen kann.

Bei einem anderen bekannten Schraubteil nach der DE 14 80 817 A1 ist in den freien Endbereich eine ringförmige Vertiefung eingearbeitet, insbesondere eingefräst. Sie hat eine nahezu regelmäßige Kontur und gleichförmige Breite. Ein derartiges Einfräsen ist mit hohem Aufwand verbunden. Jedes Schraubteil muss einzeln gefräst werden. Will man nicht immer die gleiche Vertiefung fräsen, müssen die Bearbeitungsmaschinen immer wieder umgestellt werden. Dies alles ist mit hohem Aufwand und daher auch entsprechend hohen Kosten verbunden.

Weiterhin sind diebstahlgesicherte Schraubteile bekannt aus der FR 2 658 253 B1 und der US 4,473,169 A.

Die Erfindung hat es sich zur Aufgabe gemacht, das diebstahlgesicherte Schraubteil der eingangs genannten Art dahingehend weiterzubilden, dass ein ringförmig umlaufender Spalt, wie er beim Stand der Technik vorhanden ist, möglichst vermieden wird und erreicht wird, dass die Verschlüsselung, insbesondere deren Vor- oder Rücksprünge, nicht so einfach durch ein drehangetriebenes Werkzeug, z.B. einen Akkuschrauber mit rohrförmigem Werkzeug, abgeschliffen werden können.

Diese Aufgabe wird gelöst durch die Merkmale des Anspruchs 1.

Vorzugsweise ist der Durchmesser der zweiten Kreislinie mindestens 5% größer als der Durchmesser der ersten Kreislinie.

Das erfindungsgemäße Schraubteil ist zweiteilig aufgebaut. Das Hauptstück bildet wesentliche Funktionen des Schraubteils aus. Es ist vorzugsweise so aufgebaut, dass es auch ohne Einsatzstück die komplette Funktion eines Schraubteils erfüllt. Das Hauptstück hat Innenvorsprünge, sie bilden Anschlagflächen für den Adapter aus, sie dienen der Verschlüsselung und dem Antrieb. Es hat weiterhin einen Gewindebereich.

Das Einsatzstück dient ebenfalls der Verschlüsselung und auch dem Antrieb. Für beides sind die Innenvorsprünge vorgesehen. Das Einsatzstück kann in unterschiedlichen Winkelstellungen in ein und dasselbe Hauptstück eingesetzt sein, dadurch werden vielfältige Verschlüsslungen erzielt. Es ist allerdings nicht möglich, das Einsatzstück in jeder beliebigen Winkelposition im Hauptstück anzuordnen. Die Innenvorsprünge ragen in den Bereich zwischen Außenvorsprüngen und umgekehrt.

Es können unterschiedliche Einsatzstücke mit einem Hauptstück kombiniert werden. Vorzugsweise werden mehrere, unterschiedliche Hauptstücke mit jeweils mehreren, unterschiedlich ausgebildeten und wiederum unterschiedlich im Winkel orientierten Einsatzstücken kombiniert. Der Adapter muss jeweils speziell ausgebildet sein. Vorzugsweise ist die Verschlüsselung so gewählt, dass auch ein modifizierter Adapter, der einen über nur 180 Grad anstelle von 360 Grad verlaufenden Eingreifbereich hat, möglichst auf kein anderes der unterschiedlichen Schraubteile als dasjenige, für das er bestimmt ist, passt, maximal auf ein anderes. Es wird das Einsetzen ähnlicher, aber falscher Adapter so weit wie möglich verhindert.

Der äußere Rand ist nur von der äußeren Wandfläche und den sichtbaren radialen Außenflächen der n Innenvorsprüngen gebildet. Der innere Rand ist nur von der inneren Wandfläche und den sichtbaren radialen Außenflächen der m Außenvorsprüngen gebildet.

Es werden ringförmige Vertiefungen erreicht, deren Breite über den 360 Grad Verlauf charakteristisch variiert. Derartige Vertiefungen sind aus dem Stand der Technik nicht bekannt und lassen sich nach dem Stand der Technik durch Fräsen praktisch nur mit sehr großem Aufwand realisieren, sind jedenfalls aufwendig herzustellen. Durch die winkelabhängig unterschiedliche Breite der ringförmigen Vertiefung gewinnt man bei dem Schraubteil nach der Erfindung zusätzliche Sicherheit gegen Diebstahl. Vorteilhaft ist, wenn die Vertiefung in einer Ebene quer zur Drehachse gesehen mindestens einen, vorzugsweise zwei bis vier, radiale Bereiche großer Spaltbreite hat, in denen die Spaltbreite durch die Differenz der Radien von Außenkreis und Innenkreis bestimmt ist und zudem mehrere, typischerweise sechs bis zehn, radiale Bereiche kleiner Spaltbreite aufweist, in denen die Spaltbreite bestimmt ist durch die Differenz der Radien von Außenkreis und zweiter Kreislinie oder durch die Differenz der Radien von erster Kreislinie und Innenkreis. Die Bereich liegen auf einer Kreissektorfläche um die Drehachse. Eine Ebene quer zur Drehachse wird auch als Radialebene bezeichnet.

Vorteilhafterweise ist das Spaltmaß der Vertiefung in einer Ebene quer zur Drehachse gesehen an keiner Stelle und bei beliebig orientierter Messlinie kleiner als die Differenz der Radien von Außenkreis und zweiter Kreislinie oder die Differenz der Radien von erster Kreislinie und Innenkreis. Anders ausgedrückt ist das lichte Maß der Vertiefung an keiner Stelle kleiner als die Differenz der Radien von Au-ßenkreis und zweiter Kreislinie oder durch die Differenz der Radien von erster Kreislinie und Innenkreis. Vorteilhaft ist, wenn die die Differenz der Radien von Außenkreis und zweiter Kreislinie gleich der Differenz der Radien von erster Kreislinie und Innenkreis ist.

Die Innenvorsprünge und die Außenvorsprünge sind als Zylindersegmente ausgebildet. Vorzugsweise erstrecken sich die Zylindersegmente über weniger als 180 Grad, aber mehr als 120 Grad.

Vorteilhafterweise sind die Innenvorsprünge untereinander formgleich und/oder sind die Außenvorsprünge untereinander formgleich. Insbesondere sind alle Vorsprünge, sowohl die Innenvorsprünge als auch die Außenvorsprünge untereinander formgleich.

Vorteilhafterweise ist die Anzahl n der Innenvorsprünge gleich der Anzahl m der Außenvorsprünge ist oder unterscheidet sich m von n um maximal 2, insbesondere um 1.

Die Erfindung bietet den Vorteil, dass das Hauptstück bevorzugt auf den Antrieb, also besonders günstig für ein formschlüssiges Zusammenwirken mit dem Adapter ausgebildet werden kann, während das Einsatzstück weniger auf die Einleitung von Kräften für die Drehbewegung und mehr auf die Verschlüsselung ausgelegt werden kann.

Der Verlauf des äußeren Randes ist ähnlich wie ein innenverzahntes Zahnrad ausgeführt. Der Verlauf des inneren Randes ist ähnlich wie ein aussenverzahntes Zahnrad ausgeführt. Zur Verschlüsselung können einzelne Vorsprünge bzw. Zähne größer oder kleiner als die anderen sein. In einen Zwischenraum zwischen zwei Vorsprüngen einer Art, z.B. Außenvorsprüngen, können null, ein oder zwei Vorsprünge der anderen Art eingreifen. Die Vorsprünge sind gezielt in unterschiedlichen Winkelpositionen angeordnet, anders als die regelmäßige Anordnung bei einem Zahnrad. Die unterschiedliche Winkelanordnung ist vorzugsweise durch einen Zufallsgenerator bestimmt.

Das Einsatzstück ist entweder so ausgebildet, dass es einen Kopf und einen Schaft hat, oder es ist als Ring ausgeführt. Im ersten Fall hat das Hauptstück eine Aufnahmebohrung für den Schaft. Der Schaft ist für die Aufnahme in der Aufnahmebohrung vorgesehen und entsprechend ausgebildet. Im zweiten Fall hat das Hauptstück einen axialen Stutzen, eine Innenbohrung des Rings passt auf diesen axialen Stutzen. Der Außenmantel des Kopfes oder der des Rings bildet den inneren Rand aus. Vorteilhafterweise sind die Aufnahmebohrung oder der axiale Stutzen zentrisch zur Drehachse. Sie können auch exzentrisch sein.

Das Einsatzstück ist in bevorzugter Ausführung der Erfindung unlösbar mit dem Hauptstück verbunden, wenn es einmal eingesetzt ist. Insbesondere ist es in die Aufnahmebohrung des Hauptstücks eingepresst bzw. auf den axialen Stutzen aufgepresst. Unter einer unlösbaren Verbindung wird dabei eine Verbindung verstanden, die ohne Zerstörung nicht trennbar ist. Vorzugsweise wird das Einsatzstück beim Einfügen in das Hauptstück mechanisch so deformiert, dass ein Trennen nicht mehr möglich ist.

Ein besonderer Vorzug der Erfindung liegt darin, dass Hauptstück und Einsatzstück vor dem Zusammenfügen zum Schraubteil in Serie hergestellt, sehr präzise bearbeitet und auch abschließend gehärtet bzw. oberflächenbehandelt werden können. Es muss also das fertiggestellte Schraubteil nicht mehr irgendwie behandelt werden, vielmehr ist der abschließende Schritt bei der Fertigung des Schraubteils das Zusammenfügen von Hauptstück und Einsatzstück. Auf diese Weise kann die ringförmige Vertiefung besonders präzise gefertigt werden.

Vorzugsweise ist mindestens das Hauptstück oder das Einsatzstück ein einstückiges Teil, insbesondere sind beide jeweils einstückige Teile. Hierdurch wird die Fertigung vereinfacht.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung im folgenden näher erläutert werden. In dieser zeigen:
- Fig. 1:: eine perspektivische Ansicht eines diebstahlgesicherten Schraubteils, das als Schraube ausgebildet ist und ein Hauptstück und ein Einsatzstück aufweist,
- Fig. 2:: eine Draufsicht auf den Kopf des Schraubteils gemäß Fig. 1,
- Fig. 3:: eine axiale, schnittbildliche Darstellung eines Kopfbereichs des Schraubteils nach Fig. 1,
- Fig. 4:: ein Schnittbild entlang der Schnittebene IV-IV in Fig. 3,
- Fig. 5:: eine Seitenansicht eines Einsatzstücks ähnlich demjenigen nach den Fig. 1 und 2,
- Fig. 6:: eine Draufsicht auf den Kopf des Einsatzteils gemäß Fig. 5,
- Fig. 7:: eine Seitenansicht eines Adapters für ein Schraubteil ähnlich wie in Fig. 1 und
- Fig. 8:: ein Schnittbild entlang der Schnittebene VIII-VIII in Fig. 7.

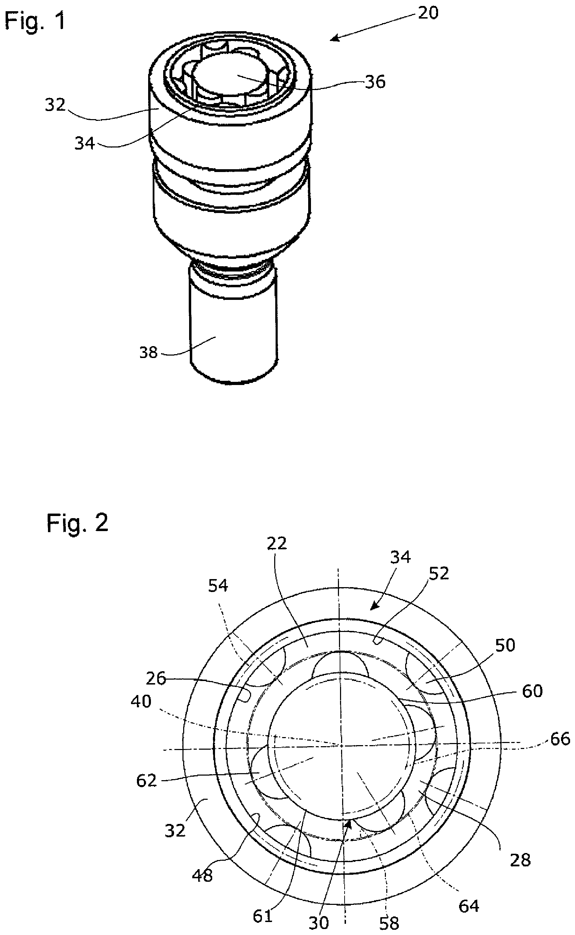

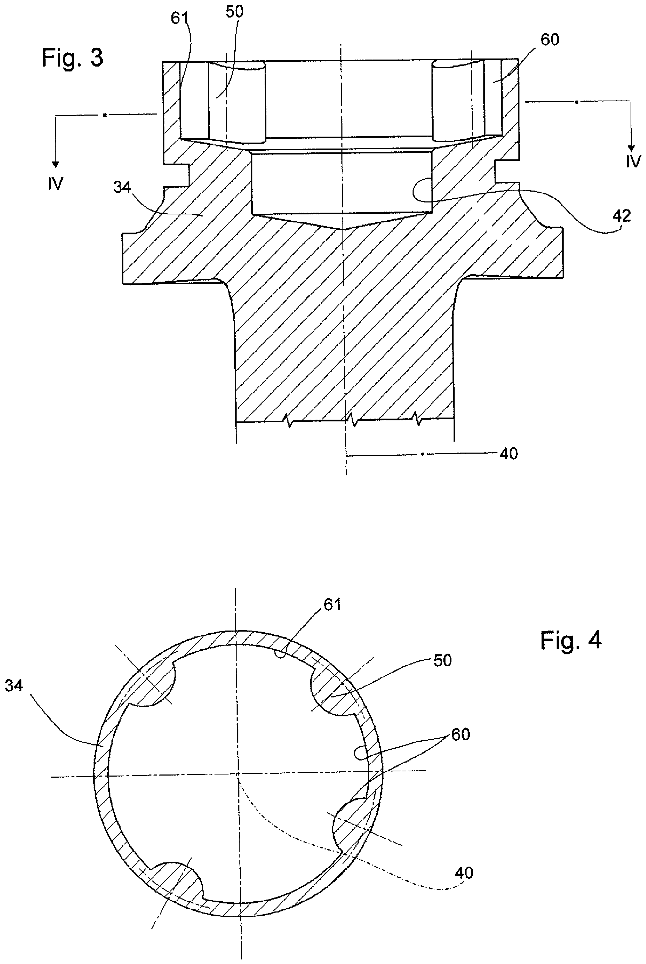

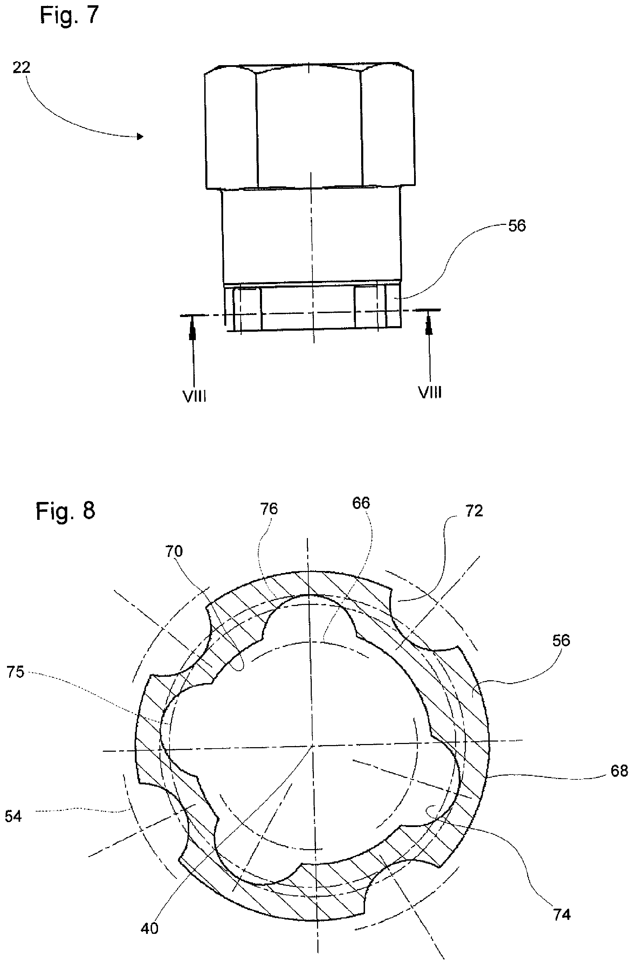

Das diebstahlgesicherte Schraubteil ist in den Ausführungsbeispielen nach Fig. 1 bis 6 stets als eine Schraube realisiert, es kann auch als Mutter ausgebildet sein. An einem freien Endbereich 20 ist axial eine ringförmige Vertiefung 22 für den Eingriff eines Adapters 24 (siehe Fig. 7 und 8) vorgesehen. Sie ermöglicht einen formschlüssigen Eingriff mit dem zur jeweiligen Verschlüsselung passenden Adapter 24, so dass das Schraubteil gedreht werden kann. Die ringförmige Vertiefung 22 hat einen äußeren Rand 26, einen Boden 28 und einen inneren Rand 30, die jeweils umlaufend sind und quer zur einer Radialen verlaufen. Mindestens einer dieser Ränder 26 oder 30, im Ausführungsbeispiel nach den Fig. 1 und 2 sind es beide, bildet Anschlagflächen für den Adapter 24 aus.

Das Schraubteil ist zusammengesetzt aus einem Hauptstück 34 und einem Einsatzstück 36. Am Hauptstück 34 befindet sich ein Gewindebereich 38, der um eine Drehachse 40 zentrisch ausgeführt ist. Das Hauptstück 34 hat alle Merkmale eines Schraubteils, es kann also auch ohne das Einsatzstück 36 für die Befestigung von Rädern an einem Kraftfahrzeug dienen. Ohne das Einsatzstück 36 ist allerdings die Diebstahlsicherung geringer.

Das Hauptstück 34 bildet den äußeren Rand 26 und den Boden 28 der ringförmigen Vertiefung 22. Der innere Rand 30 dieser ringförmigen Vertiefung 22 wird durch das Einsatzstück 36 realisiert. Durch die zweistückige Ausbildung lässt sich die ringförmige Vertiefung 22 in Serie und sehr präzise fertigen, insbesondere können der Boden 28 und der Übergang zwischen dem Boden 28 und dem inneren Rand 30 sehr präzise durchgeführt werden. Wie die Figuren zeigen, sind die beiden Ränder 26, 28 in axialer Richtung im Wesentlichen gleich lang. Weiterhin stehen sie sich im zusammengesetzten Zustand direkt gegenüber. Sie verlaufen parallel zur Drehachse 40.

Das Einsatzstück 36 ist so hart und fest ausgeführt und im Hauptstück 34 so fest verankert, dass es nicht einfach zerstört oder entfernt werden kann. Das Hauptstück 34 hat eine Aufnahmebohrung 42 für das Einsatzstück 36. Diese Aufnahmebohrung 42 ist in der Ausführung nach den Fig. 1 bis 4 zentrisch zur Drehachse 40 ausgeführt. Sie ist zylindrisch. Das Einsatzstück 36 hat einen Kopf 44 und einen Schaft 46. Der Schaft 46 ist so ausgeführt, dass er ein gewisses Übermaß gegenüber der Aufnahmebohrung 42 hat und in diese eingepresst werden kann.

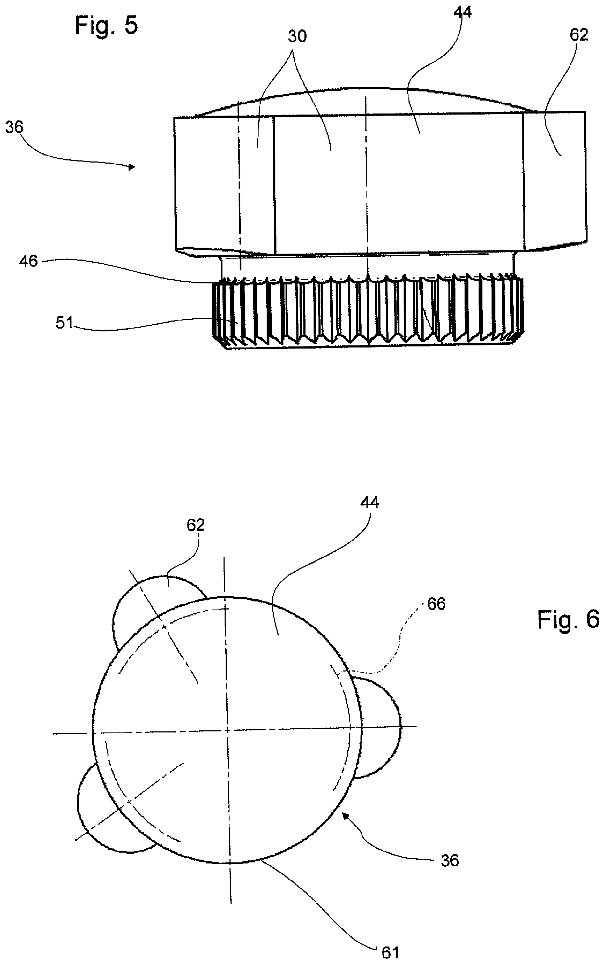

Im gezeigten Ausführungsbeispiel nach den Fig. 5 und 6 hat der Kopf 44 einen Außendurchmesser, der, mit einer Abweichung plusminus 25%, dem Außendurchmesser des Schafts 46 entspricht. Der Schaft 46 kann eine größere oder kleinere radiale Abmessung haben als der Kopf (44) oder beide können ungefähr gleiche Abmessungen haben. Der Kopf 44 des Einsatzstücks 36 ist axial länger als der Schaft 46. Vorzugsweise ist der der Schaft 46 in Axialrichtung 20 bis 80%, vorzugsweise etwa halb so lang wie Kopf 44.

Der Schaft 46 hat an seiner Außenseite axiale Riefen 51 die sich beim Einpressen des Schaftes 46 in die Aufnahmebohrung 42 verformen.

Das Einsatzstück 36 kann in jeder beliebigen Drehposition in die Aufnahmebohrung 42 eingesetzt werden. Die einmal gewählte Drehposition bleibt beibehalten und kann ohne Zerstörung nicht verändert werden. Bei jeder neuen Drehposition verändert sich jeweils der Verlauf der ringförmigen Vertiefung 22.

Das Hauptstück 34 und das Einsatzstück 36 sind vor dem Zusammenfügen bereits abschließend bearbeitet, z.B. auch oberflächenbehandelt. Es lassen sich zweifarbige Ausführungen realisieren. Weiterhin ist es nicht notwendig, das zusammengesetzte Schraubteil zu behandeln. Vielmehr kann es unmittelbar nach dem Zusammenfügen von Hauptstück 34 und Einsatzstück 36 verpackt werden. Eine umständliche Zuordnung der jeweils erreichten Verschlüsselung bei einem nachfolgenden Arbeitsgang ist damit nicht nötig. Gerade bei der hohen Anzahl der möglichen Verschlüsslungen, die durch die Erfindung erreicht wird, ist dies eine deutliche Vereinfachung des Herstellungsvorgangs des Schraubteils.

Der äußere Rand 26 wird von einer äußeren Wandfläche 48 und mehreren Innenvorsprüngen 50 definiert und begrenzt. Die äußere Wandfläche 48 liegt auf einem Außenkreis 52. Mit n wird die Anzahl der Innenvorsprünge 50 angegeben. Im gezeigten Ausführungsbeispiel nach den Figuren 1 bis 4 ist n=4. Die Zahl n kann zwischen 2 und 8 liegen, vorzugsweise liegt n zwischen 3 und 5, insbesondere hat n den Wert 3 oder 4. Die Innenvorsprünge 50 sind jeweils als Zylindersegment ausgebildet und haben eine in der Radialebene liegende obere Abschlussfläche, auf die man in Figur 2 schaut. Die Zylindersegmente, die die Innenvorsprünge 50 bilden, erstrecken sich über ca. 150°. Sie werden gebildet durch Kreise, deren Mittelpunkt auf einem äußeren Teilkreis 54 liegt. Er hat einen Durchmesser, der 5 bis 12%, vorzugsweise etwa 8% größer ist als der Durchmesser des Außenkreises 52. Typische Werte für den Durchmesser des Außenkreises 52 liegen bei 12 bis 22, insbesondere 15 bis 20 mm. Weil der äußere Teilkreis 54 weiter außen liegt als der Außenkreis 52, münden die Innenvorsprünge 50 mit einem Winkel von etwa 75 bis 80° in den Außenkreis 52. Die Innenvorsprünge 50 sind alle baugleich. Sie sind über möglichst unterschiedliche Winkel über den Umfang des Außenkreises 52 verteilt angeordnet. Radial nach innen hin haben sie einen Scheitelpunkt, der auf einer ersten Kreislinie 58 liegt.

Der innere Rand 30 ist begrenzt durch eine innere Wandfläche 60 und mehrere, nämlich m, Außenvorsprünge 62. Im gezeigten Ausführungsbeispiel nach den Figuren 1 bis 4 ist m=4. In der Ausführung nach den Figuren 5 und 6 ist m=3. Vorzugsweise liegt m zwischen 3 und 5, insbesondere hat m den Wert 3 oder 4. Die innere Wandfläche 60 liegt auf einem Innenkreis 61. Die Außenvorsprünge 62 sind im Wesentlichen baugleich mit den Innenvorsprüngen 50. Sie springen radial nach außen vor bis hin zu einer zweiten Kreislinie 64. Diese zweite Kreislinie 64 liegt vollständig außerhalb der ersten Kreislinie 58. Ihr Durchmesser ist vorzugsweise mindestens 2%, insbesondere mindestens 5% größer als der Durchmesser der ersten Kreislinie 58. Die Außenvorsprünge 62 sind jeweils als Zylindersegment ausgebildet und haben eine in der Radialebene liegende obere Abschlussfläche, auf die man in Figur 2 schaut. Die Zylindersegmente, die die Außenvorsprünge 64 bilden, erstrecken sich über ca. 210°.

Auch die Außenvorsprünge 64 sind ausgehend von einem Teilkreis, nämlich einem inneren Teilkreis 66, konstruiert. Dieser liegt um dasselbe Maß ausgehend von der zweiten Kreislinie 64 nach innen versetzt, wie der äußere Teilkreis 54 gegenüber dem Außenkreis 52 nach außen versetzt ist. Dieses Maß beträgt ca. 2 bis 6% des Durchmessers des Außenkreises 52. Die Außenvorsprünge 62 sind untereinander baugleich. Aufgrund der beschriebenen Konstruktion sind Innenvorsprünge 50 und Außenvorsprünge 62 im Wesentlichen baugleich. Auch die Außenvorsprünge 62 sind möglichst unregelmäßig über den Umfang verteilt, in diesem Fall über die zweite Kreislinie 62. In axialer Richtung haben die Innenvorsprünge 50 und die Außenvorsprünge 62 gleiche Abmessungen, die Abmessungen unterscheiden sich maximal um 20%. Sie erstrecken sich jeweils axial über dieselbe Höhe wie die äußere Wandfläche 48 bzw. die innere Wandfläche 60. Die äußere Wandfläche 48 und die innere Wandfläche 60 sind jeweils durch Zylinderflächen definiert.

Die Innenvorsprünge 50 sind über den Umfang gesehen dort angeordnet, wo eine Lücke zwischen den Außenvorsprüngen 62 vorhanden ist und umgekehrt. In einer Lücke zwischen zwei Vorsprüngen kann, wie in den Ausführungsbeispielen gezeigt, jeweils ein Vorsprung der anderen Art vorgesehen sein, es kann aber auch kein Vorsprung oder es können zwei Vorsprünge der anderen Art vorgesehen sein. Ein Innenvorsprung 50 und ein benachbarter Außenvorsprung 62 haben stets einen lichten Abstand voneinander, der größer ist als die folgenden Differenzen: a) Radius des Außenkreises 52 minus Radius zweiten Kreislinie 64 und b) Radius der der ersten Kreislinie 58 minus Radius des Innenkreises 61. Im gezeigten Ausführungsbeispiel nach den Figuren 1 bis 4 sind diese beiden Differenzen gleich groß, eine Abweichung ± 5% ist möglich.

Die Fig. 7 und 8 zeigen einen Adapter 24. Der Adapter 24 hat einen Vorsprung 56, der der ringförmigen Vertiefung 22 angepasst ist. Die Zuordnung der ringförmigen Vertiefung 22 zum Adapter 24 ist so gewählt, dass nur ein einziger Eingriff möglich ist, wenn der Adapter 24 um 360° gegenüber dem Schraubteil um die Drehachse 40 gedreht wird, bevor er in die Vertiefung 22 eingreift.

Das Hauptstück 34 ist vorzugsweise durch Kaltverformung, insbesondere Kaltstauchen gefertigt. Auf diese Weise ist eine kostengünstige Herstellung möglich.

Figur 8 zeigt einen Schnitt in der Radialebene durch den Vorsprung 56. Dieser ist so ausgebildet, dass er exakt in die Vertiefung 22 passt, der Eingriff ist möglichst spielfrei. Der Querschnitt gemäß Fig. 8 wird begrenzt durch einen Außenrand 68, der auf einem Kreisbogen mit einem Durchmesser liegt, der um das nötige Maß für die Passung kleiner ist als der Durchmesser des Außenkreises 52. Er wird nach innen begrenzt durch einen Innenrand 70, der auf einem Kreisbogen liegt, der entsprechend etwas größer ist als der Innenkreis 61. Für jeden der Vorsprünge 50, 62 ist eine entsprechend geformte Bucht 72 bzw. 74 vorgesehen. Es sind vier Innenbuchten 72, angepasst jeweils an die Innenvorsprünge 50, und vier Außenbuchten 74, angepasst jeweils an die Außenvorsprünge 62, vorgesehen. Die Buchten 72, 74 sind, wie die Vorsprünge 50, 62, von einer Zylinderfläche eines Zylindersegments begrenzt, sie sind nun aber konkav (und nicht konvex, wie die Vorsprünge 50, 62. Sie sind konstruiert ausgehend von denselben Teilkreisen 54 bzw. 66 wie für die Vorsprünge 50, 62, jedoch nun mit (für die Passung) angepasstem, etwas größerem Radius des Kreises, also einem geringfügig (z.B. 2% bis 5%) größeren Radius als für die Zylinderwand als die Vorsprünge 50 bzw. 62. Letztere haben einen Radius von etwa 20 bis 35%, vorzugsweise etwa 28% des Radius des Außenkreises 52. Die Innenbuchten 72 liegen mit ihren Scheitelpunkten auf einer ersten Randlinie 75, deren Durchmesser geringfügig kleiner ist als der Durchmesser der ersten Kreislinie 58. Die vier Au-ßenbuchten 74 haben Scheitelpunkte, die auf einer zweiten Randlinie 76 liegen, deren Durchmesser etwas größer ist als derjenige der zweiten Kreislinie 64. Aufgrund der Maßzugabe für die Passung ist die Differenz der Radien der ersten Randlinie 75 und der zweiten Randlinie 76 deutlich größer als die Differenz der Radien der ersten Kreislinie 58 und der zweiten Kreislinie 64. Wiederum gilt, dass die zweite Randlinie 76 einen größeren Durchmesser hat, in diesem Fall mindestens 5%, insbesondere 8% größeren Durchmesser, als die erste Randlinie 75. Die erste Randlinie 75 liegt vollständig innerhalb der zweiten Randlinie 76.

In einer Ebene quer zur Drehachse 40 gesehen, hat der Vorsprung 56 stets eine Abmessung, gemessen bei beliebig in dieser Ebene orientierter Messlinie, die nicht kleiner ist als die Radiendifferenz Außenrand 68 minus zweiter Randlinie 76 oder die Radiendifferenz erste Randlinie 75 minus Innenrand 70. Im gezeigten Ausführungsbeispiel nach den Figuren 7 und 8 sind diese beiden Differenzen gleich groß, eine Abweichung ± 5% ist möglich. Der gezeigte Querschnitt gemäß Figur 8 ändert sich nicht über die axiale Höhe des Vorsprungs 56.

Der Adapter 24 und/oder das Hauptstück 34 weisen eine Härte von 450 +50HV auf.

Das diebstahlgesicherte Schraubteil hat eine ringförmig verlaufende Vertiefung 22 für den Eingriff eines Adapters 24, welche Vertiefung 22 von außen nach innen gesehen von einem äußeren Rand 26, einem Boden 28 und einem inneren Rand 30 begrenzt ist. Das Schraubteil ist aus einem Hauptstück 34 und einem Einsatzstück 36 zusammengefügt. Das Hauptstück 34 bildet den äußeren Rand 26 aus, der innere Rand 30 ist durch das Einsatzstück 36 ausgebildet. Der äußere Rand 26 ist von einer äußeren Wandfläche 48, die auf einem Außenkreis 52 liegt, und durch mehrere Innenvorsprünge 50, die vom Außenkreis 52 zur Drehachse 40 hin bis zu einer ersten Kreislinie 58 vorspringen, begrenzt. Der innere Rand 30 ist von einer inneren Wandfläche 60, die auf einem Innenkreis 61 liegt und zudem durch mehrere Außenvorsprünge 62 begrenzt, die vom Innenkreis 61 nach außen hin bis zu einer zweiten Kreislinie 64 vorspringen. Die erste Kreislinie 58 liegt vollständig innerhalb der zweiten Kreislinie 64. Der Durchmesser der zweiten Kreislinie 64 ist größer als der Durchmesser der ersten Kreislinie 58.

### Bezugszeichenliste

- 20: freier Endbereich
- 22: Vertiefung
- 24: Adapter
- 26: äußerer Rand
- 28: Boden
- 30: inneren Rand
- 32: Ring
- 34: Hauptstück
- 36: Einsatzstück
- 38: Gewindebereich
- 40: Drehachse
- 42: Aufnahmebohrung
- 44: Kopf (von 36)
- 46: Schaft (von 36)
- 48: äußere Wandfläche
- 50: Innenvorsprung
- 51: Riefen
- 52: Außenkreis
- 54: äußerer Teilkreis
- 56: Vorsprung
- 58: erste Kreislinie
- 60: innere Wandfläche
- 61: Innenkreis
- 62: Außenvorsprung
- 64: zweite Kreislinie
- 66: innerer Teilkreis
- 68: Außenrand
- 70: Innenrand
- 72: Innenbucht (für 50)
- 74: Außenbucht (für 62)
- 75: erste Randlinie
- 76: zweite Randlinie

## Patentansprüche

1. Diebstahlgesichertes Schraubteil, nämlich Radmutter oder Radschraube für die Befestigung einer Felge an einem Kraftfahrzeug, mit einer Drehachse (40) und einer an einem freien Endbereich (20) des Schraubteils ausgebildeten, ringförmig verlaufenden Vertiefung (22) für den Eingriff eines Adapters (24) zum Drehen des Schraubteils, welche Vertiefung (22) von außen nach innen gesehen von einem äußeren Rand (26), einem Boden (28) und einem inneren Rand (30) begrenzt ist, wobei mindestens einer dieser Ränder (26, 30) Anschlagflächen für den Adapter (24) ausbildet, das Schraubteil zusammengesetzt ist aus einem Hauptstück (34) und einem Einsatzstück (36), die zusammengefügt und fest miteinander verbunden sind, das Hauptstück (34) den äußeren Rand (26) ausbildet und der innere Rand (30) durch das Einsatzstück (36) ausgebildet ist, der äußere Rand (26) begrenzt ist a) von einer äußeren Wandfläche (48), die auf einem Außenkreis (52) liegt, **dadurch gekennzeichnet, dass** der äußere Rand (26) b) begrenzt ist durch mehrere, nämlich n, Innenvorsprünge (50), die vom Außenkreis (52) zur Drehachse (40) hin bis zu einer ersten Kreislinie (58) vorspringen, dass der innere Rand (30) c) begrenzt ist von einer inneren Wandfläche (60), die auf einem Innenkreis (61) liegt und d) zudem durch mehrere, nämlich m, Außenvorsprünge (62), die vom Innenkreis (61) nach außen hin bis zu einer zweiten Kreislinie (64) vorspringen, dass die erste Kreislinie (58) vollständig innerhalb der zweiten Kreislinie (64) liegt, dass der Durchmesser der zweiten Kreislinie (64) größer ist als der Durchmesser der ersten Kreislinie (58), und dass die Innenvorsprünge (50) und die Außenvorsprünge (62) als Zylindersegmente ausgebildet sind.

2. Schraubteil nach Anspruch 1, **dadurch gekennzeichnet, dass** i) die Zylindersegmente der Innenvorsprünge (50) über weniger als 180 Grad, aber mehr als 120 Grad erstrecken und ii) die Zylindersegmente der Außenvorsprünge (62) über 150 bis 210 Grad, insbesondere etwa 180 Grad erstrecken.

3. Schraubteil nach Anspruch 1 oder 2, **dadurch gekennzeichnet, dass** die Innenvorsprünge (50) untereinander formgleich sind und/oder dass die Au-ßenvorsprünge (62) untereinander formgleich sind.

4. Schraubteil nach einem der vorangegangenen Ansprüche, **dadurch gekennzeichnet, dass** die Anzahl n der Innenvorsprünge (50) gleich der Anzahl m der Außenvorsprünge (62) ist oder sich m von n um maximal 2, insbesondere 1 unterscheidet.

5. Schraubteil nach einem der vorangegangenen Ansprüche, **dadurch gekennzeichnet, dass** die Anzahl n der Innenvorsprünge (50) plus der Anzahl m der Außenvorsprünge (62) sechs bis zwölf, vorzugsweise sieben bis zehn ist.

6. Schraubteil nach einem der vorangegangenen Ansprüche, **dadurch gekennzeichnet, dass** die Vertiefung (22) in einer Ebene quer zur Drehachse (40) gesehen mindestens einen, vorzugsweise zwei bis vier, radiale kreissektorförmige Bereiche hat, in denen die Spaltbreite in der Ebene durch die Differenz der Radien von Außenkreis (52) und Innenkreis (61) bestimmt ist und zudem mehrere, typischerweise sechs bis zehn, radiale kreissektorförmige Bereiche aufweist, in denen die Spaltbreite bestimmt ist durch die Differenz der Radien von Außenkreis (52) und zweiter Kreislinie (64) oder durch die Differenz der Radien von erster Kreislinie (58) und Innenkreis (61).

7. Schraubteil nach dem vorangegangenen Anspruch, **dadurch gekennzeichnet, dass** das Spaltmaß der Vertiefung (22) in einer Ebene quer zur Drehachse (40) gesehen an keiner Stelle und bei beliebig in der Ebene orientierter Messlinie kleiner ist als die Differenz der Radien von Außenkreis (52) und zweiter Kreislinie (64) oder die Differenz der Radien von erster Kreislinie (58) und Innenkreis (61).

8. Schraubteil nach einem der vorangegangenen Ansprüche, **dadurch gekennzeichnet, dass** die Außenvorsprünge (62) möglichst über ungleiche Winkel über den Innenkreis (61) verteilt angeordnet sind, und/oder dass die Innenvorsprünge (50) möglichst über ungleiche Winkel über den Au-ßenkreis (52) verteilt sind.

9. Schraubteil nach Anspruch 1, **dadurch gekennzeichnet, dass** das Hauptstück (34) entweder eine Aufnahmebohrung (42) oder einen axialen Stutzen aufweist, wobei a) im Fall einer Aufnahmebohrung (42) das Einsatzstück (36) einen Kopf (44) und einen Schaft (46), der der Aufnahmebohrung (42) angepasst ist, aufweist, und b) im Falle eines Stutzens das Einsatzstück (36) ringförmig ist und eine Innenbohrung aufweist, die dem Stutzen angepasst ist.

10. Schraubteil nach Anspruch 1, **dadurch gekennzeichnet, dass** das Hauptstück (34) und/oder das Einsatzstück (36) ein einstückiges Teil ist, insbesondere dass beide Teile jeweils ein einstückiges Teil sind.

11. Schraubteil nach Anspruch 1, **dadurch gekennzeichnet, dass** der Durchmesser der zweiten Kreislinie (64) mindestens 5% größer ist als der Durchmesser der ersten Kreislinie (58).

## Claims

1. An anti-theft screw part, namely a wheel nut or wheel bolt for fixing a rim to a motor vehicle, comprising a rotational axis (40) and a recess (22) formed at a free end region (20) of the screw part and annularly extending, for engaging an adapter (24) for rotating the screw part, which recess (22), as viewed from the outward to the inward direction, is limited by an outer edge (26), a bottom (28) and an inner edge (30), wherein at least one of these edges (26, 30) form abutment faces for the adapter (24), the screw part is assembled of a main piece (34) and an insert piece (36) that are assembled and are firmly attached to each other, the main piece (34) forming the outer edge (26) and the inner edge (30) being formed by the insert piece (36), the outer edge (26) being limited by a) an outer wall surface (48), which is located on an outer circle (52), **characterized in that** the outer edge (26) b) is limited by several, namely n, internal projections (50), which project from the outer circle (52) towards the rotational axis to a first circular line (58), **in that** the inner edge (30) c) is limited by an inner wall surface (60), which is located on an inner circle (61) and d) by a plurality, namely m, of outer projections (62), which project from the inner circle (61) towards the exterior to a second circular line (64), **in that** the first circular line (58) is located completely within the second circular line (64), **in that** the diameter of the second circular line (64) is larger than the diameter of the first circular line (58), and **in that** the internal projections (50) and the outer projections (62) are formed as cylinder segments.

2. The screw part according to Claim 1, wherein i) the cylinder segments of the internal projections (50) extend across less than 180 degrees, but more than 120 degrees and ii) the cylinder segments of the outer projections (62) extend across 150 to 210 degrees, especially about 180 degrees.

3. The screw part according to Claim 1 or 2, wherein the internal projections (50) are equal in shape with each other and/or the outer projections (62) are equal in shape with each other.

4. The screw part according to one of the aforementioned claims, wherein the number of n of the internal projections (50) is equal to the number of m of the outer projections (62) or m differs from n by a maximum of 2, especially 1.

5. The screw part according to one of the aforementioned claims, wherein the number of n of the internal projections (50) plus the number of m of the outer projections (62) ranges from six to twelve, in particular seven to ten.

6. The screw part according to one of the aforementioned claims, **characterized in that** the recess (22), as viewed in a plane transversally to the rotational axis (40), has at least one radial region in the form of a circular sector, in particular two to four, where the gap width in the plane is determined by the difference of the radii of the outer circle (52) and the inner circle (61) and further includes a plurality, typically six to ten, of radial regions in the form of a circular sector, where the gap width is determined by the difference of the radii of the outer circle (52) (52) and the second circular line (64) or by the difference of the radii of the first circular line (58) and the inner circle (61).

7. The screw part according to one of the aforementioned claims, **characterized in that** the gap dimension of the recess (22), as viewed in a plane transversally to rotational axis (40), at no location and with any measuring line orienteered in the plane, is smaller than the difference of the radii of the outer circle (52) and the second circular line (64) or the difference of the radii of the first circular line (58) and the inner circle (61).

8. The screw part according to one of the aforementioned claims, **characterized in that** the outer projections (62) are arranged as far as possible across unequal angles across the inner circle (61), and/or that the internal projections (50) are distributed as far as possible across unequal angles across the outer circle (52).

9. The screw part according to Claim 1, **characterized in that** the main piece (34) either has a receiving bore (42) or an axial connector, wherein a) in the case of a receiving bore (42), the insert piece (36) has a head (44) and a shaft (46), which is adapted to the receiving bore (42), and b) in the case of a connector, the insert piece (36) is annular and has an internal bore, which is adapted to the connector.

10. The screw part according to Claim 1, **characterized in that** the main piece (34) or the insert piece (36) is a one-piece part, especially that both parts are a one piece part.

11. The screw part according to Claim 1, **characterized in that** the diameter of the second circular line (64) is at least 5% larger than the diameter of the first circular line (58).

## Revendications

1. Élément de vissage à sécurité antivol, à savoir écrou de roue ou boulon de roue pour la fixation d'une jante à un véhicule automobile, avec un axe de rotation (40) et un évidement (22) s'étendant de manière annulaire formé à une zone d'extrémité libre (20) de l'élément de vissage pour la mise en prise d'un adaptateur (24) pour faire tourner l'élément de vissage, lequel évidement (22), en vue de l'extérieur vers l'intérieur, est délimité par un bord extérieur (26), un fond (28), et un bord intérieur (30), dans lequel au moins l'un de ces bords (26, 30) forme des surfaces de butée pour l'adaptateur (24), l'élément de vissage se compose d'une pièce principale (34) et d'une pièce rapportée (36) qui sont assemblées et reliées de manière fixe entre elles, la pièce principale (34) forme le bord extérieur (26), et le bord intérieur (30) est formé par la pièce rapportée (36), le bord extérieur (26) est délimité a) par une surface de paroi extérieure (48) qui se situe sur un cercle extérieur (52), **caractérisé en ce que** le bord extérieur (26) b) est délimité par plusieurs, à savoir n saillies intérieures (50) faisant saillie du cercle extérieur (52) vers l'axe de rotation (40) jusqu'à une première circonférence (58), que le bord intérieur (30) c) est délimité par une surface de paroi intérieure (60) qui se situe sur un cercle intérieur (61) et d) en outre par plusieurs, à savoir m saillies extérieures (62) qui font saillie du cercle intérieur (61) vers l'extérieur jusqu'à une deuxième circonférence (64), que la première circonférence (58) se situe entièrement à l'intérieur de la deuxième circonférence (64), que le diamètre de la deuxième circonférence (64) est supérieur au diamètre de la première circonférence (58), et que les saillies intérieures (50) et les saillies extérieures (62) sont réalisées en tant que segments de cylindre.

2. Élément de vissage selon la revendication 1, **caractérisé en ce que** i) les segments de cylindre des saillies intérieures (50) s'étendent de l'ordre de moins de 180 degrés, mais de plus de 120 degrés et ii) que les segments de cylindre des saillies extérieures (62) s'étendent de l'ordre de 150 à 210 degrés, en particulier de près de 180 degrés.

3. Élément de vissage selon la revendication 1 ou 2, **caractérisé en ce que** les saillies intérieures (50) ont des formes identiques entre elles et/ou que les saillies extérieures (62) ont des formes identiques entre elles.

4. Élément de vissage selon l'une des revendications précédentes, **caractérisé en ce que** le nombre n de saillies intérieures (50) est égal au nombre m de saillies extérieures (62) ou que m diffère de n au maximum de l'ordre de 2, en particulier de 1.

5. Élément de vissage selon l'une des revendications précédentes, **caractérisé en ce que** le nombre n de saillies intérieures (50) plus le nombre m de saillies extérieures (62) est de six à douze, de préférence de sept à dix.

6. Élément de vissage selon l'une des revendications précédentes, **caractérisé en ce que** l'évidement (22) possède, dans un plan en vue transversalement à l'axe de rotation (40), au moins une, en particulier deux à quatre zones radiales en forme de secteurs circulaires dans lesquelles la largeur d'écartement dans le plan est définie par la différence entre les rayons du cercle extérieur (52) et du cercle intérieur (61), et présente en outre plusieurs, typiquement six à dix zones radiales en forme de secteurs circulaires dans lesquelles la largeur d'écartement est déterminée par la différence entre les rayons du cercle extérieur (52) et de la deuxième circonférence (64) ou par la différence entre les rayons de la première circonférence (58) et du cercle intérieur (61).

7. Élément de vissage selon la revendications précédente, **caractérisé en ce que** la dimension d'écartement de l'évidement (22) n'est, à aucun endroit dans un plan en vue transversalement à l'axe de rotation (40), et est, en cas d'une ligne de mesure orientée au choix dans le plan, plus petite que la différence entre les rayons du cercle extérieur (52) et de la deuxième circonférence (64) ou la différence entre les rayons de la première circonférence (58) et du cercle intérieur (61).

8. Élément de vissage selon l'une des revendications précédentes, **caractérisé en ce que** les saillies extérieures (62) sont disposées de manière répartie si possible selon des angles irréguliers sur le cercle intérieur (61) et/ou que les saillies intérieures (50) sont réparties si possible selon des angles irréguliers sur le cercle extérieur (52).

9. Élément de vissage selon la revendication 1, **caractérisé en ce que** la pièce principale (34) présente soit un alésage de réception (42), soit un embout axial, dans lequel a) en cas d'un alésage de réception (42), la pièce rapportée (36) présente une tête (44) et une tige (46) qui est adaptée à l'alésage de réception (42), et b) en cas d'un embout, la pièce rapportée (36) est annulaire et présente un alésage intérieur qui est adapté à l'embout.

10. Élément de vissage selon la revendication 1, **caractérisé en ce que** la pièce principale (34) et/ou la pièce rapportée (36) est une pièce monobloc, en particulier **en ce que** les deux pièces sont respectivement une pièce monobloc.

11. Élément de vissage selon la revendication 1, **caractérisé en ce que** le diamètre de la deuxième circonférence (64) est supérieur d'au moins 5% au diamètre de la première circonférence (58).
